# EUROPEAN PATENT APPLICATION

(11) **EP 2 447 851 A1**
(43) Date of publication of application: **02.05.2012**
(21) Application number: 11176036.9
(22) Date of filing: 29.07.2011
(51) Int. Cl.: G06F 13/16

(54) **Transmission device, transmission method, and transmission program**

(30) Priority: 22.10.2010 JP 2010237859
(71) Applicant: FUJITSU LIMITED, Kawasaki-shi, Kanagawa 211-8588 (JP)
(72) Inventor: Negishi, Tatsuhiko, Kanagawa 211-8588 (JP); Shirase, Kenji, Kanagawa 211-8588 (JP); Ogami, Shogo, Kanagawa 211-8588 (JP)
(74) Representative: Stebbing, Timothy Charles

(57) **Abstract**

A transmission device (1) includes a plurality of memory units (2 to 4) storing requests for processing information stored in a memory. Moreover, when a request from a first device is received, the transmission device (1) analyzes the received request to specify an address range including a memory address storing data to be subjected to the requested processing. The transmission device (1) stores requests in different memory units for each address range. Moreover, the transmission device (1) determines for each memory unit whether the stored requests are being executed by a second device. The transmission device (1) transmits a request which is stored in a memory unit and which is determined to be not being executed, to the second device.

## Description

### FIELD

The embodiments discussed herein are directed to a transmission device, a transmission method, and a transmission program.

### BACKGROUND

A technique of controlling an execution order of processing by controlling the order of transmitting requests for processing information stored in a memory is known. As an example of a transmission device using such a technique, a bridge device that temporarily stores requests for processing received from an input/output (I/O) device and transmits the stored requests to a system controller that executes the processing is known.

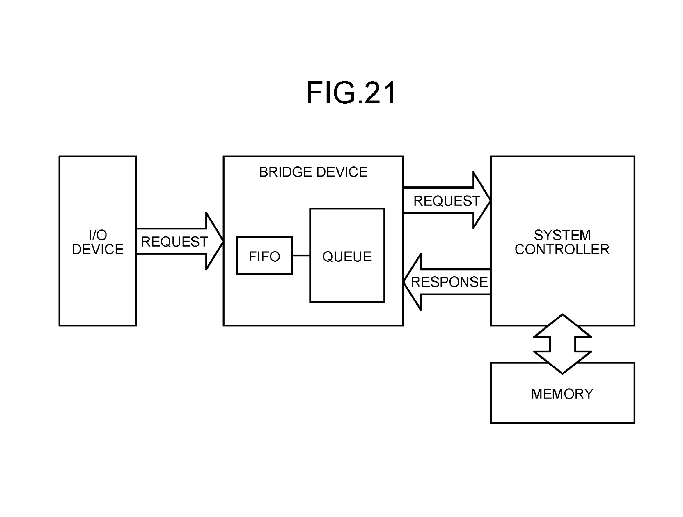

FIG. 21 is a diagram illustrating an example of a bridge device. In the example illustrated in FIG. 21, a bridge device receives requests from an I/O device. The requests indicate the memory addresses to be processed and the contents of processing to be performed on information. Moreover, the bridge device transmits the requests received from the I/O device to a system controller that processes a plurality of requests in parallel.

Here, the system controller caches part of the information stored in the memories, in the controller in units of cache lines in order to efficiently execute processing. Moreover, the system controller has a TAG memory indicating which information of an address out of information stored in memories corresponds to the information cached in the processor.

Moreover, when the system controller receives the requests, the system controller executes snooping of searching the TAG memory using the memory addresses indicated by the received requests. After that, the system controller executes the processing contents indicated by the requests in accordance with the execution results of the snooping and updates the caches of the controller and the contents of the TAG memory in synchronization with the processing executed.

On the other hand, the I/O device issues non-interleaved requests (NIRs) that are executed in issuance order and interleaved requests (IRs) that are executed regardless of the issuance order. Therefore, when NIRs are included in the requests stored in the bridge device, the bridge device transmits the request while maintaining the issuance order of NIRs.

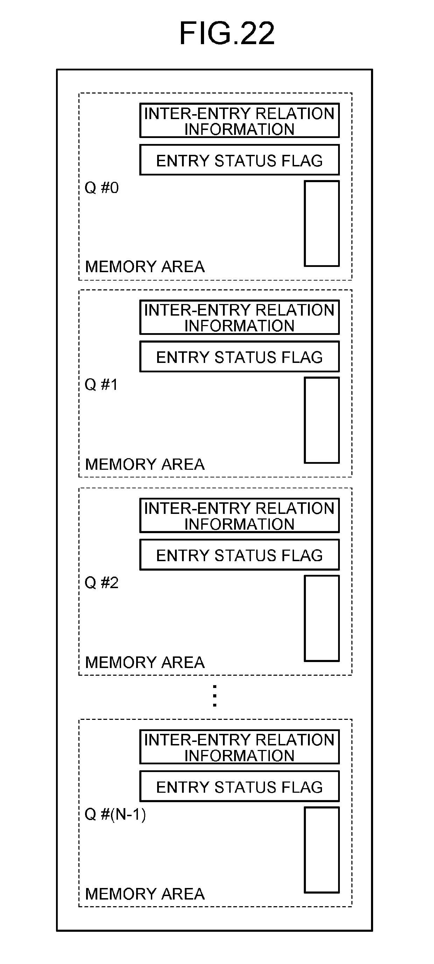

FIG. 22 is a diagram illustrating memory areas of the bridge device. For example, in the example illustrated in FIG. 22, the bridge device has a plurality of queues Q #0 to Q #(N-1) which are memory areas for storing individual requests. Moreover, each memory area of the memory areas Q #0 to Q #(N-1) has inter-entry relation information indicating the reception order of the requests received by the bridge device and an entry status flag indicating whether stored request is an NIR.

When requests from the I/O device are received by the bridge device, the bridge device analyzes the received requests and determines whether the received requests are NIRs. When the received requests are determined to be NIRs, the bridge device stores the received requests in certain memory areas and sets an entry status flag indicating the stored requests are NIRs. Moreover, the bridge device stores the reception order of the requests in the memory areas storing the requests as inter-entry relation information.

After that, the bridge device transmits an NIR received first to the system controller based on the entry status flag and the inter-entry relation information of the respective memory areas. Moreover, when the execution results of the transmitted NIR from the system controller are received as responses, the bridge device transmits a following NIR of the transmitted NIR, to the system controller. Moreover, an IR from the I/O device is received, the bridge device transmits the IR to the system controller without waiting for a response from the system controller.

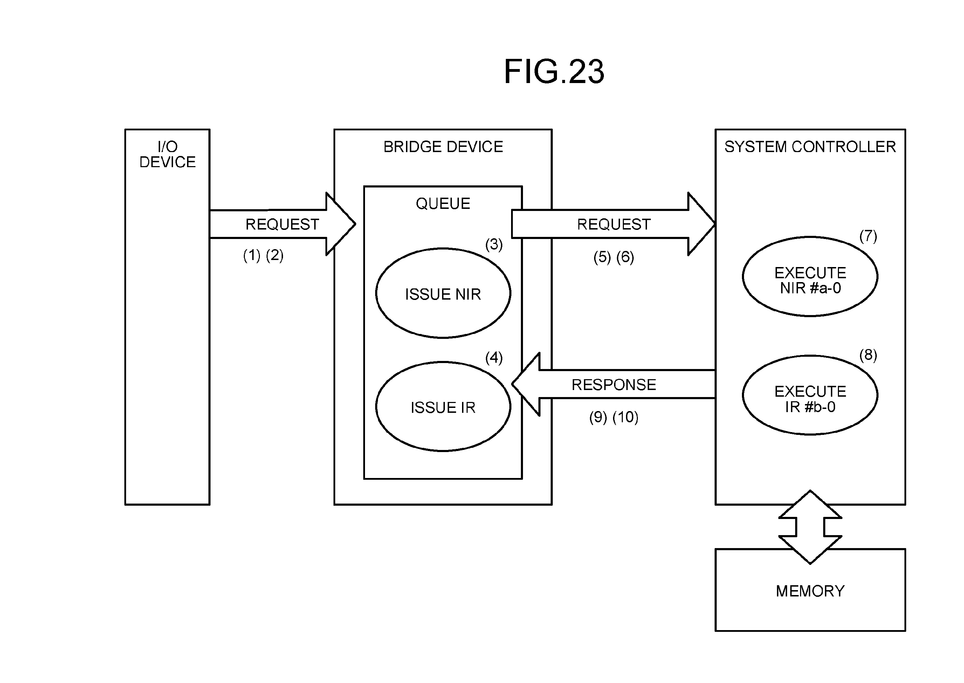

FIG. 23 is a diagram illustrating the flow of processing executed by the bridge device. In the example illustrated in FIG. 23, the bridge device receives an NIR #a-0 and an IR #b-0 from the I/O device (see (1) and (2) in FIG. 23). In this case, the bridge device transmits the NIR #a-0 to the system controller and also transmits the IR #b-0 to the system controller without waiting for a response to the NIR #a-0 (see (3) to (6) in FIG. 23).

In this case, the system controller executes the received NIR #a-0 and IR #b-0 in parallel (see (7) and (8) in FIG. 23). After that, the system controller transmits the execution results of the NIR #a-0 and IR #b-0 to the bridge device as a response (see (9) and (10) in FIG. 23).

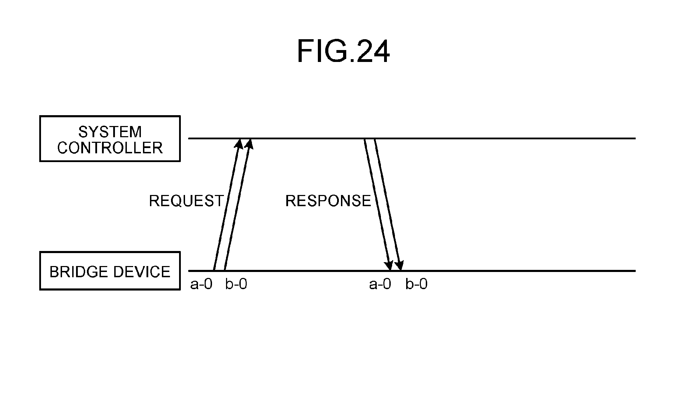

That is, as illustrated in FIG. 24, the bridge device transmits the request IR #b-0 to the system controller without receiving a response to the NIR #a-0. FIG. 24 is a timing chart illustrating the flow of processing executed by the bridge device with an elapse of time from left to right.

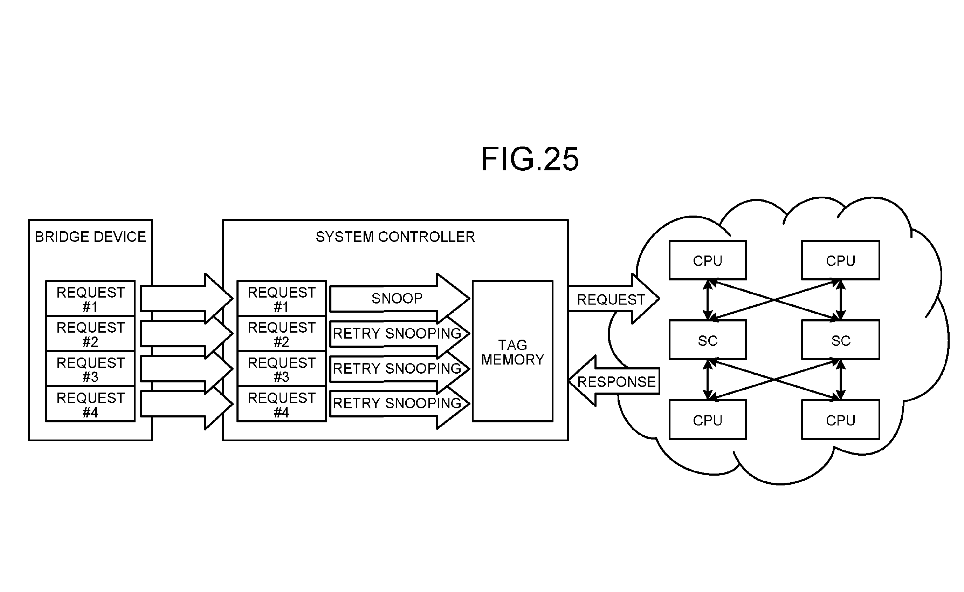

However, in the technique of transmitting IRs without waiting for responses to NIRs, since requests are transmitted regardless of the memory addresses indicated by the respective requests, there is a problem in that it is not possible to efficiently execute processing on the information stored in the memories. The problem will be described with reference to FIGS. 25 to 27.

FIG. 25 is a diagram (1) illustrating a decrease in processing performance of the system controller. In the example illustrated in FIG. 25, the system controller receives requests #1 to #4 from a bridge device. However, when the addresses indicated by the requests #1 to #4 are included in the same cache line address, in order to maintain the coherence of caches, the system controller does not simultaneously execute snooping of all the requests #1 to #4 but executes snooping of only the request #1.

Moreover, the system controller executes the processing contents indicated by the request #1 and rejects snooping of the requests #2 to #4 until updating of the caches and the TAG memory in accordance with the executed processing finishes. That is, when a plurality of requests indicating addresses included in the same cache line address are received, the system controller suspends subsequent requests in order to maintain the coherence of caches. Thus, it is not possible to execute processing efficiently.

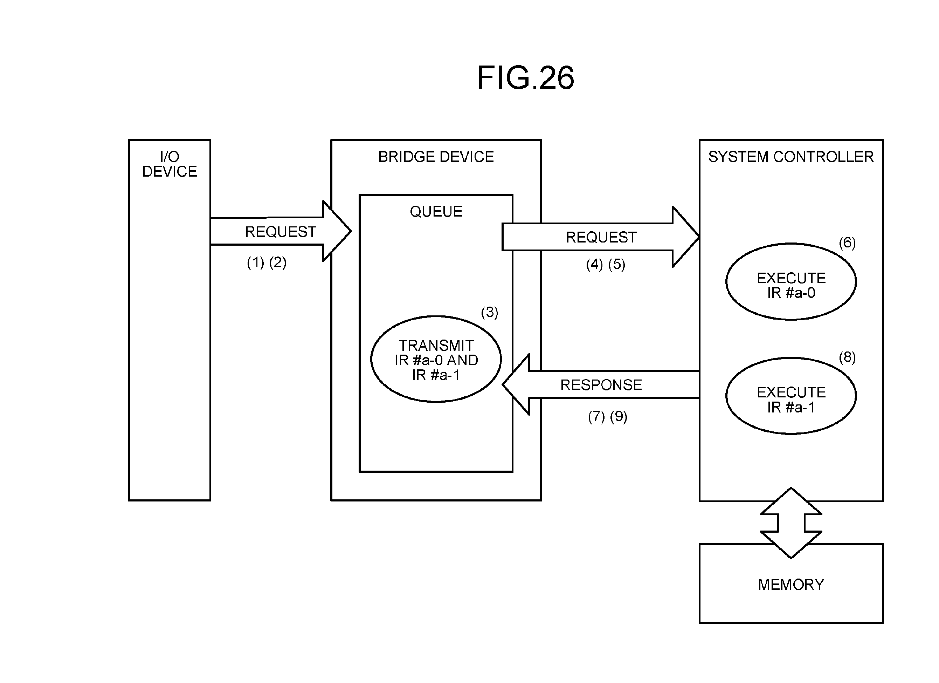

FIG. 26 is a diagram (2) illustrating a decrease in processing performance of the system controller. In the example illustrated in FIG. 26, the bridge device receives IRs #a-0 and #a-1 indicating addresses included in the same cache line address (see (1) and (2) in FIG. 26). In this case, the bridge device transmits the IRs #a-0 and #a-1 to the system controller (see (3) to (5) in FIG. 26).

However, the system controller does not execute snooping of the IR #a-1 but suspends the IR #a-1 until the processing of the IR #a-0 is completed and updating of the caches and the TAG memory finishes (see (6) to (9) in FIG. 26).

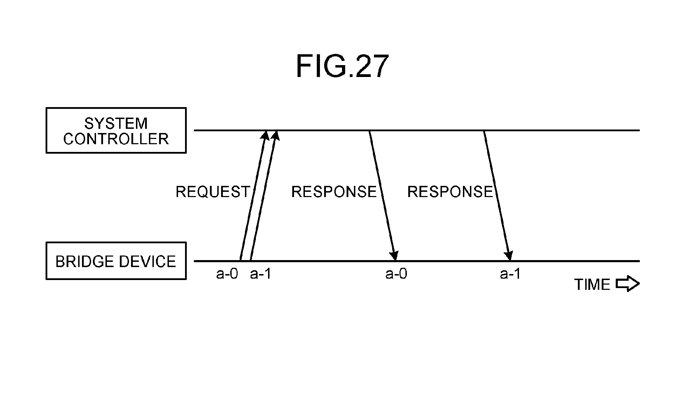

Therefore, as illustrated in the time chart of FIG. 27, when the bridge device transmits the IRs #a-0 and #a-1 to the system controller at the same time, execution of the IR #a-1 is suspended, and the processing performance of the system controller decreases.

Accordingly, it is desirable to provide processing on the information stored in memories is executed efficiently.

### SUMMARY

According to an embodiment of an aspect of the invention, a transmission device includes a first memory unit that stores requests which require order controlled execution among requests for processing information stored in a memory. The transmission device further includes a plurality of second memory units that store requests which do not require order controlled execution among the requests, each of the second memory units corresponding to a different address range of the memory segmented to have a size of a unit of process execution. The transmission device further includes an order control determination unit that analyzes a request received from a first device to determine whether the received request is a request that requires order controlled execution. The transmission device further includes a specifying unit that analyzes a request received from the first device to specify an address range including a memory address storing data to be subjected to the requested processing. The transmission device further includes a storing unit that stores the request in the first memory unit when the order control determination unit determined that the request is a request that requires order controlled execution, and stores the request in a second memory unit corresponding to the specified address range when the order control determination unit determined that the request is a request that does not require order controlled execution. The transmission device further includes a determination unit that determines for each of the second memory units whether the request stored in the second memory unit is being executed by a second device. The transmission device further includes a transmission unit that transmits a request which is stored in a second memory unit to the second device when the determination unit determines that the request is not being executed by the second device.

### BRIEF DESCRIPTION OF DRAWINGS

The present invention will now be described by way of examples only, with reference to the accompanying drawings, in which:

FIG. 1 is a diagram illustrating a transmission device according to a first embodiment;
FIG. 2 is a diagram illustrating an I/O controller according to a second embodiment;
FIG. 3 is a diagram illustrating a ROU according to the second embodiment;
FIG. 4 is a diagram illustrating an IRQ;
FIG. 5 is a diagram illustrating cache lines;
FIG. 6 is a diagram illustrating an NIRQ;
FIG. 7 is a diagram illustrating distribution of requests;
FIG. 8 is a diagram illustrating the flow of an enqueue process and a transmission process;
FIG. 9 is a diagram illustrating a process in which the I/O controller according to the second embodiment transmits a request in accordance with an address range of the request;
FIG. 10 is a time chart illustrating the flow of processing executed by the I/O controller according to the second embodiment;
FIG. 11 is a diagram illustrating a queue;
FIG. 12 is a diagram illustrating an enqueue process;
FIG. 13 is a diagram illustrating a request issuing process;
FIG. 14 is a diagram illustrating a dequeue process;
FIG. 15 is a flowchart illustrating the flow of processing executed by the ROU according to the second embodiment;
FIG. 16 is a flowchart illustrating the flow of processing executed by a filler;
FIG. 17 is a flowchart illustrating the flow of processing executed by an arbiter;
FIG. 18 is a flowchart illustrating the flow of processing executed by a transmitter;
FIG. 19 is a flowchart illustrating the flow of processing executed by a receiver;
FIG. 20 is a diagram illustrating an example of a computer that executes a transmission program;
FIG. 21 is a diagram illustrating an example of a bridge device;
FIG. 22 is a diagram illustrating memory areas of the bridge device;
FIG. 23 is a diagram illustrating the flow of processing executed by the bridge device;
FIG. 24 is a time chart illustrating the flow of processing executed by the bridge device;
FIG. 25 is a diagram (1) illustrating a decrease in processing performance of the system controller;
FIG. 26 is a diagram (2) illustrating a decrease in processing performance of the system controller;
   and
FIG. 27 is a time chart illustrating the flow of processing executed by the bridge device.

### DESCRIPTION OF EMBODIMENTS

Embodiments of the present invention will be explained with reference to accompanying drawings.

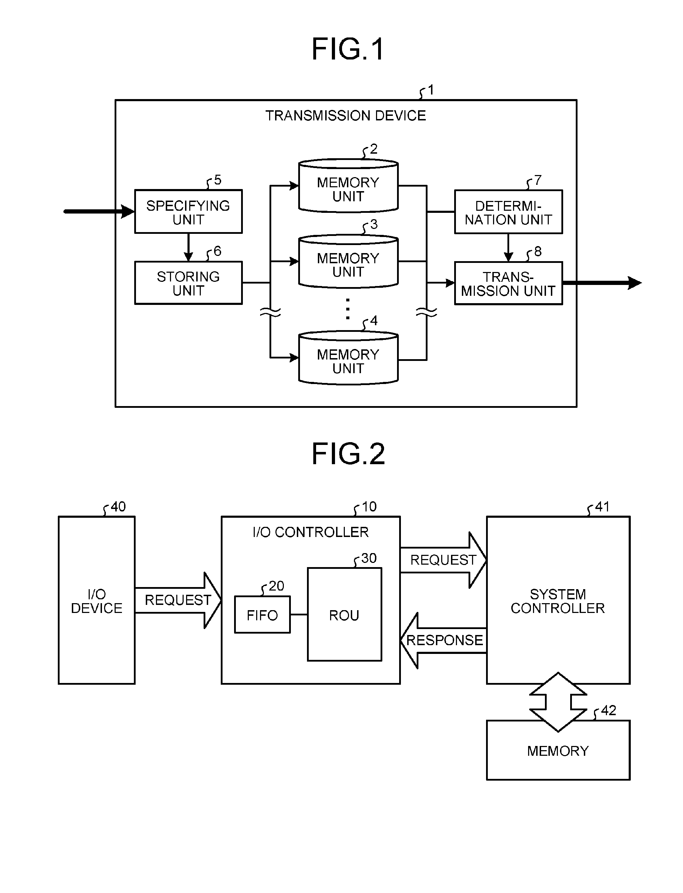

[a] First Embodiment
In the first embodiment, an example of a transmission device will be described with reference to FIG. 1. FIG. 1 is a diagram illustrating a transmission device according to the first embodiment.

As illustrated in FIG. 1, a transmission device 1 includes memory units 2, 3, and 4. It is assumed that the transmission device 1 includes more memory units than the illustrated memory units. Moreover, the transmission device 1 includes a specifying unit 5, a storing unit 6, a determination unit 7, and a transmission unit 8. The transmission device 1 issues requests received from a first information processing device to a second information processing device having a cache memory. The memory units 2 to 4 store requests for processing information stored in a memory for each cache line address that is a segment having a predetermined size which is an execution unit of processing. When the requests from the first information processing device is received, the specifying unit 5 analyzes the received requests to specify cache line addresses, from among the caches of the second information processing device, including a memory address storing data to be subjected to the requested processing.

The storing unit 6 stores the received requests in the different memory units 2 to 4 for each of the cache line addresses specified by the specifying unit 5. The determination unit 7 determines whether the requests stored in the respective memory units 2 to 4 by the storing unit 6 are being executed by the second information processing device. The transmission unit 8 transmits a request stored in a memory unit (for example, the memory unit 2) storing only requests which are determined by the determination unit 7 not being executed by the second information processing device, to the second information processing device.

As described above, when requests for processing information stored in a memory are received, the transmission device 1 specifies cache line addresses including a memory address in which data to be subjected to the requested processing is stored. Moreover, the transmission device 1 stores the requests in different memory units for each of the specified cache line addresses. After that, the transmission device 1 determines whether the requests stored in the respective memory units 2 to 4 are being executed by the second information processing device. The transmission device 1 transmits a request stored in the memory unit (for example, the memory unit 2) storing only requests which are determined not being executed by the second information processing device, to the second information processing device. On the other hand, when it is determined that a memory unit stores requests being executed by the second information processing device, the transmission device 1 does not transmit a new request stored in the memory unit (for example, the memory unit 3) determined as such to the second information processing device.

That is, the transmission device 1 transmits only requests for processing addresses included in different cache line addresses to the second information processing device. Therefore, the transmission device 1 can cause the second information processing device to execute processing efficiently.

For example, a plurality of requests for processing addresses included in the same cache line address are received, the second information processing device suspends subsequent requests when any one of the requests is being executed in order to maintain coherence of caches. However, the transmission device 1 stores the requests in different memory units for each of the cache line addresses including the processing target address and determines whether the requests stored in the respective memory units are being executed by the second information processing device.

Moreover, the transmission device 1 transmits a request stored in the memory unit which store only requests determined not being executed by the second information processing device, to the second information processing device. That is, the transmission device 1 transmits only a request for processing a cache line address different from that of the request being executed by the second information processing device. Therefore, the transmission device 1 can solve the suspension of the request by the second information processing device and allow the second information processing device to execute processing efficiently.

[b] Second Embodiment
In the second embodiment, an input/output (I/O) controller will be described as an example of the transmission device.

First, an I/O controller according to the second embodiment will be described with reference to FIG. 2. As illustrated in FIG. 2, an I/O controller 10 includes a first-in-first-out (FIFO) 20 and a request ordering unit (ROU) 30. Moreover, the I/O controller 10 is connected to an I/O device 40 that issues requests for processing information stored in a memory and a system controller 41 that executes processing indicated by the requests. Furthermore, the system controller 41 is connected to a memory 42.

Here, it is assumed that the I/O device 40 and the I/O controller 10 are connected by a peripheral component interconnect (PCI)-Express bus. Moreover, it is assumed that the I/O device 40 transmits requests which are transmitted from a storage device such as a hard disk drive (HDD) connected to the I/O device 40 to the I/O controller 10.

Moreover, it is assumed that the system controller 41 has a cache memory and caches information stored in the memory 42 in units of 256 bits. That is, it is assumed that the size of the cache line of the cache memory possessed by the system controller 41 is 256 bits. Moreover, it is assumed that the I/O controller 10 transmits and receives 64-bit requests.

Furthermore, it is assumed that the I/O controller 10 receives "direct memory access (DMA) read," "DMA write weakly ordered," or "DMA write strongly ordered" as a request. Here, the "DMA write weakly ordered" and "DMA read" requests are interleaved requests (IRs) that do not require execution order control. Moreover, the "DMA write strongly ordered" request is a non-interleaved request (NIR) which does not require execution order control.

When requests are received from the I/O device 40, the I/O controller 10 stores the received requests in the FIFO 20 and transmits the requests stored in the FIFO 20 to the system controller 41 using the ROU 30.

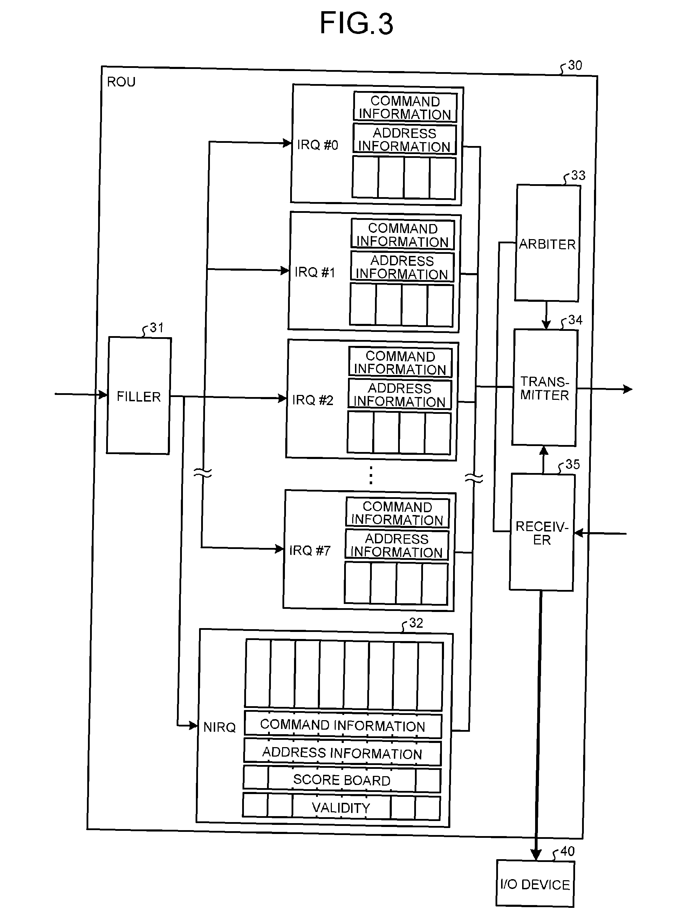

Next, the respective parts of the ROU 30 according to the second embodiment will be described with reference to FIG. 3. FIG. 3 is a diagram illustrating the ROU according to the second embodiment. As illustrated in FIG. 3, the ROU 30 includes a filler 31, interleaved request queues IRQ #0 to IRQ #7, and a non-interleaved request queue (NIRQ) 32. Moreover, the ROU 30 includes an arbiter 33, a transmitter 34, and a receiver 35.

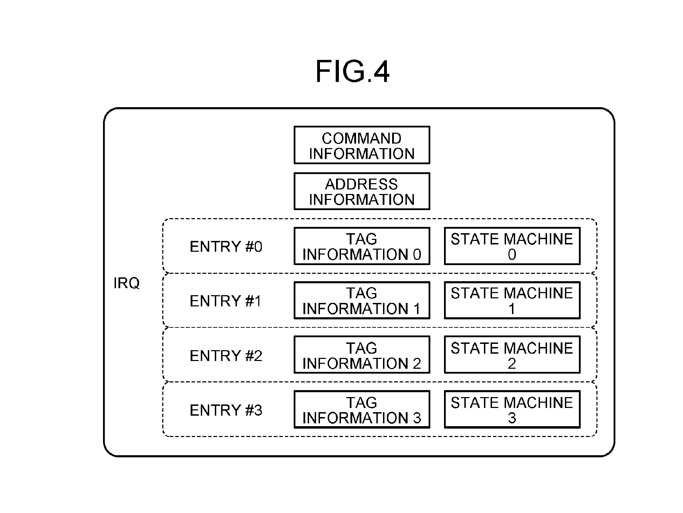

The respective IRQs #0 to #7 are memory units for storing IRs which require execution order control among the requests for processing information stored in the memory 42. Hereinafter, the respective IRQs #0 to #7 will be described in detail with reference to FIG. 4.

In the example illustrated in FIG. 4, an IRQ includes command information and address information. Here, the respective IRQs #0 to #7 store IRs that are the same command type and that are requests for processing addresses included in the same cache line address. Here, the command information indicates the command type of the stored request. For example, information indicating "DMA write weakly ordered" or "DMA read" is stored in the command information.

Moreover, the address information indicates a cache line address including the addresses which are to be subjected to processing of the respective stored requests. That is, a plurality of requests of the same command type and are requests for processing addresses included in the same cache line address are stored in one IRQ. For example, information indicating the upper bits of a memory address storing data to be subjected to processing of the respective stored requests is stored in the address information.

That is, information indicating the cache line address including the memory addresses storing data to be subjected to processing of the respective stored requests is stored in the address information. Therefore, requests that have the same processing contents and that are stored in the memory addresses of which the upper bits are the same are stored in one IRQ where the memory addresses store data to be subjected to processing.

For example, the system controller 41 according to the second embodiment caches information of the memory 42 in a cache memory in the system controller 41 in units of "256" bits. Therefore, the system controller 41 caches the information stored in the memory with the size of the cache line set to "256" bits.

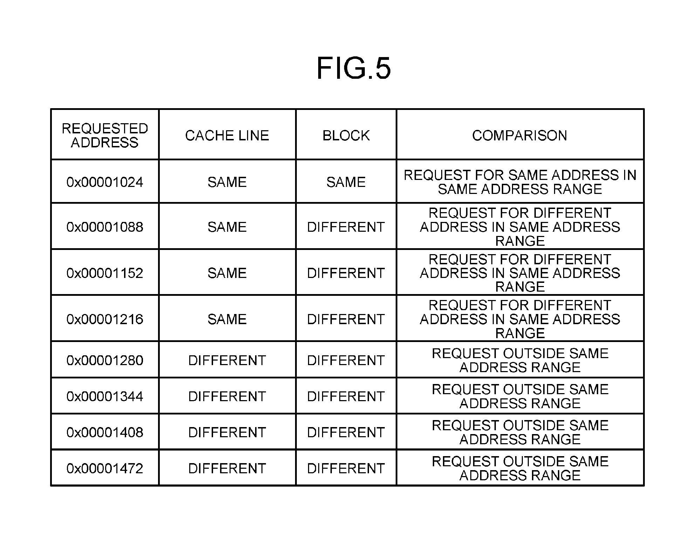

FIG. 5 is a diagram illustrating cache lines. As illustrated in FIG. 5, the addresses "0x00001088," "0x00001152," and "0x00001216" are addresses included in the same cache line address as the address "0x00001024." Moreover, the addresses "0x00001280," "0x00001344," "0x00001408," and "0x00001472" are addresses included in a different cache line address from that of the address "0x00001024."

Here, the block in FIG. 5 refers to the unit by which a CPU manages directory information of a memory. For example, when a block size is "64" bits, the CPU manages information stored in a memory in units of "64" bits. In this case, in the example illustrated in FIG. 5, the data stored in the addresses "0x00001088," "0x00001152" "0x00001216," "0x00001280," "0x00001344," "0x00001408," and "0x00001472" are included in a block different from that of the address "0x00001024."

In the following description, the addresses included in the same cache line address will be referred to as "addresses included in the same address range." Therefore, in the example illustrated in FIG. 5, the request to the address "0x00001024" is a request to the same address in the same address range as the address "0x00001024." Moreover, the requests to the addresses "0x00001088," "0x00001152," "0x00001216" are requests to different addresses in the same address range as the request to the address "0x00001024." Furthermore, the requests to the addresses "0x00001280," "0x00001344," "0x00001408," "0x00001472" are requests outside the same address range as the request to the address "0x00001024."

Returning to FIG. 4, the IRQ includes a plurality of entries #0 to #3 which are memory areas. The respective entries #0 to #3 are memory areas each being capable of storing one request. Moreover, the respective entries #0 to #3 include tag information #0 to #3 for uniquely identifying the stored requests.

Moreover, the respective entries #0 to #3 have state machines #0 to #3 which are information for controlling a process of issuing the requests stored in the respective entries. The state machines #0 to #3 transition to any one of the states indicating "invalid," "issuable," and "standby" to thereby control a process of storing requests in the respective entries #0 to #3 and a process of issuing the IRs stored in the respective entries #0 to #3.

A new request is stored in an entry in which the state machine is in the invalid state. For example, the filler 31 to be described later stores a new request in the entry #0 in which the state machine #0 indicates "invalid." Moreover, the transmitter 34 to be described later transmits a request stored in the entry #0 to the system controller 41 when the state machine #0 is in the state indicating "issuable." Furthermore, the transmitter 34 to be described later does not transmit any request from the IRQ in which the state machine is in the "standby" state but transmits the requests stored in other IRQs.

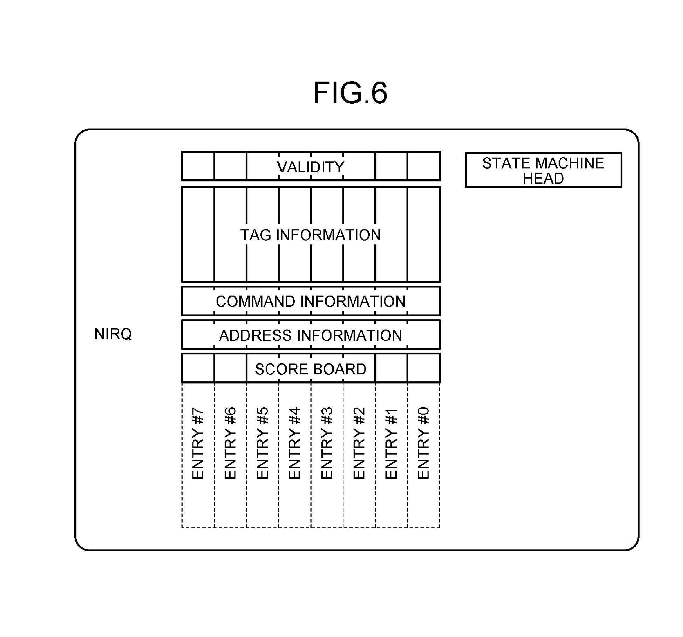

Returning to FIG. 3, the NIRQ 32 is a memory unit for storing NIRs which are requests that require execution order control among the requests for processing the information stored in the memory 42. FIG. 6 is a diagram illustrating the NIRQ. Specifically, as illustrated in FIG. 6, the NIRQ 32 includes a plurality of entries #0 to #7 as memory areas, and one NIR is stored in each of the entries #0 to #7.

Moreover, each of the entries #0 to #7 has an independent area for recording command information, address information, and tag information. Here, the command information of the respective entries #0 to #7 is information indicating the command type of the NIRs stored in the respective entries #0 to #7.

Moreover, the address information of the respective entries #0 to #7 is information indicating the address range including the memory addresses storing the data to be subjected to processing of the NIRs stored in the respective entries #0 to #7. Specifically, the upper bits of a memory address storing data to be subjected to processing of the NIRs are stored in the address information.

Moreover, the tag information is information for uniquely identifying the NIRs stored in the respective entries #0 to #7. In addition, each of the respective entries #0 to #7 has an area for recording the validity indicating whether the NIRs stored in the respective entries #0 to #7 are valid.

In addition, the respective entries #0 to #7 have a score board storing an order control flag indicating the relationship between the reception order of the requests stored in the NIRQ 32 and the reception order of the requests stored in the respective IRQs #0 to #7. Furthermore, the order control flag stored in the score board also indicates the relationship between the address range of the addresses to be subjected to processing of the requests stored in the respective entries #0 to #7 and the address range of the addresses to be subjected to processing of the respective requests stored in the respective IRQs #0 to #7.

That is, the score boards of the respective entries #0 to #7 store the order control flag which indicates the relationship between the address range including the memory addresses storing the data to be subjected to processing of the requests stored in the respective entries and the address range including the memory addresses storing the data to be subjected to processing of the requests stored in the respective IRQs #0 to #7 and which indicates the relationship between the reception order of the requests stored in the respective entries and the reception order of the respective requests stored in the respective IRQs #0 to #7.

Therefore, the arbiter 33 to be described later can easily detect an IRQ storing IRs which are received by the I/O controller 10 earlier than the NIRs stored in the respective entries #0 to #7 of the NIRQ 32, for processing information stored in addresses in the same address range using the order control flag stored in the score board.

Hereinafter, the score board will be described in detail. Each of the respective entries #0 to #7 has a score board having eight storage areas. Moreover, the respective storage areas of the respective score boards are correlated with any of the respective IRQs #0 to #7. Furthermore, a value "1" or "0" is stored in the respective storage areas of the score board. As will be described later, the filler 31 retrieves an IRQ storing requests for processing the addresses included in the same address range as the requests stored in the respective entries #0 to #7 of the NIRQ 32. Moreover, the filler 31 stores "1" in the storage area of the score board correlated with the retrieved IRQ.

That is, in the score board of each of the entries #0 to #7 of the NIRQ 32, "1" is stored in the storage areas correlated with IRQs storing requests which are designed for processing the addresses included in the same address range among the requests stored in the IRQs #0 to #7, and which are received by the I/O controller 10 earlier than the requests stored in the respective entries #0 to #7 of the NIRQ 32.

Therefore, for example, when "1" is stored in a memory area correlated with the IRQ #1, the score board can indicate that requests which are designed for processing the addresses included in the same address range as the request stored in the entry #0 of the NIRQ 32 and which are received earlier than the request stored in the entry #0 of the NIRQ 32 are stored in the IRQ #1.

As described above, a flag indicating the reception order of the requests stored in the NIRQ 32 and the requests stored in the respective IRQs #0 to #7 as received by the I/O controller 10 is stored in the score board. As an example of the score board, a case in which "1" is stored in a storage area correlated with the IRQ #0 among the storage areas of the score board of the entry #0 will be described. The score board indicates that requests which are designed for processing the addresses included in the same address range as the request stored in the entry #0 of the NIRQ 32 and which are received by the I/O controller 10 earlier than the request stored in the entry #0 of the NIRQ 32 are stored in the IRQ #0.

Moreover, the NIRQ 32 has a state machine head which is information for controlling a request issuing process. The state machine head transitions to any of the states "issuable" and "standby" to thereby control a process of issuing requests stored in the respective entries #0 to #7.

Next, the state of the state machine head and an example of processing will be described. For example, the transmitter 34 to be described later transmits the requests stored in the respective entries #0 to #7 of the NIRQ 32 to the system controller 41 when the state machine head indicates "issuable." Moreover, the transmitter 34 to be described later does not transmit any of the requests stored in the respective entries #0 to #7 of the NIRQ 32 to the system controller 41 when the state machine head indicates "standby."

Returning to FIG. 3, when requests from the I/O device 40 are received, the filler 31 analyzes the received requests and determines whether the requests are NIRs. Moreover, the filler 31 analyzes the received requests to specify the address ranges including the memory addresses storing the data to be subjected to the requested processing. When the requests are determined to be NIRs, the filler 31 stores the requests in the NIRQ 32. Moreover, when the requests are determined not to be NIRs, the filler 31 stores the requests in different IRQs #0 to #7 for each of the specified address ranges.

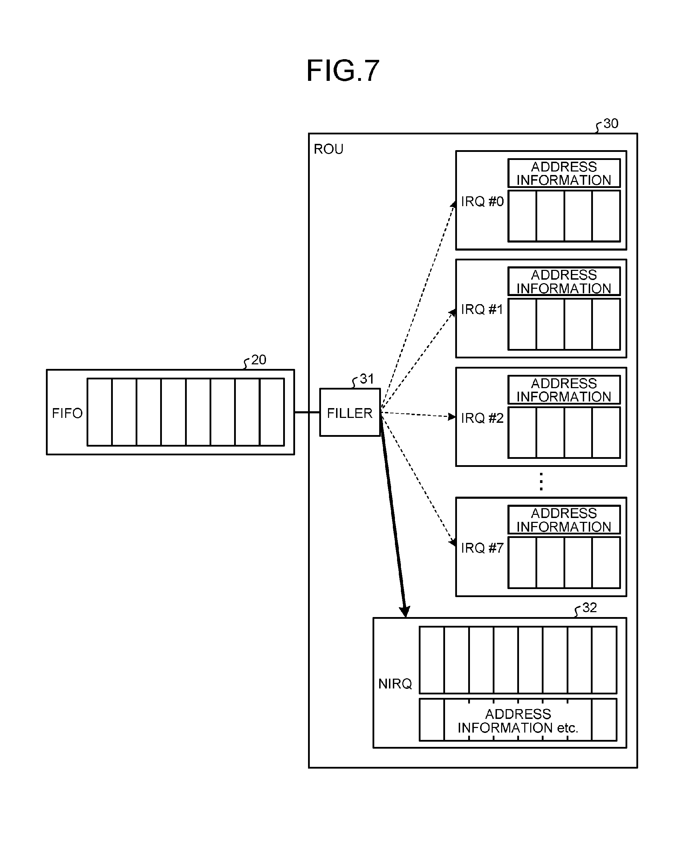

Specifically, the filler 31 acquires requests stored in the FIFO 20. Moreover, the filler 31 analyzes the acquired requests and specifies the address ranges including the memory addresses storing data to be subjected to the requested processing and the requested processing contents. After that, when the specified processing contents are "DMA write weakly ordered" (IR) or "DMA read" (IR), the filler 31 stores the acquired requests in IRQs corresponding to the specified addresses as indicated by the dotted lines in FIG. 7.

When the specified processing contents are "DMA write strongly ordered" (NIR), the filler 31 stores the acquired requests in the NIRQ 32 as indicated by the solid line in FIG. 7. FIG. 7 is a diagram illustrating distribution of requests.

Hereinafter, the process of storing the requests acquired by the filler 31 in the IRQs #0 to #7 or the NIRQ 32 will be described in detail. In the following description, three cases in which the processing contents acquired by the filler 31 are "DMA write weakly ordered" (IR), "DMA write strongly ordered" (NIR), and "DMA read" (IR) will be described.

First, a description will be made about a case in which the processing contents acquired by the filler 31 are "DMA write weakly ordered" (IR). When it is determined that the acquired requests are IRs, the filler 31 retrieves an IRQ storing the same address information as the specified address ranges and the same command information as the specified processing contents from the IRQs #0 to #7.

When an IRQ storing the same address information as the specified address ranges and the same command information as the specified processing contents is detected through retrieval, the filler 31 determines whether an empty entry is present in the detected IRQs. The empty entry means an entry in which no request is stored.

When it is determined that an empty entry is present in the detected IRQs, the filler executes an enqueue process of storing the acquired requests in the empty entry of the detected IRQs. Moreover, when executing the enqueue process, the filler 31 causes the state machine of the entries storing the requests to transition to the issuable state.

When it is determined that an empty entry is not present in the detected IRQs, the filler 31 retrieves an IRQ storing neither command information nor address information from the IRQs #0 to #7. That is, the filler 31 retrieves an empty IRQ in which no request is stored. When an empty IRQ is detected through retrieval, the filler 31 executes an enqueue process of storing the acquired requests in the detected empty IRQ. Moreover, when executing the enqueue process, the filler 31 causes the state machine of the entries storing the requests to transition to the issuable state.

Moreover, when the requests are stored in the empty IRQ, the filler 31 stores the specified address ranges as the address information in the IRQ storing the requests and stores the specified processing contents as the command information in the IRQ storing the requests. Moreover, when no empty IRQ is detected, the filler 31 stalls the processing until an empty IRQ is detected.

When no IRQ storing the same address information as the specified address ranges and the same command information as the specified processing contents is detected, the filler retrieves an empty IRQ. When an empty IRQ is detected through retrieval, the filler 31 executes an enqueue process of storing the acquired requests in the detected empty IRQ and stores the address information and the command information in the IRQ storing the requests. Moreover, when no empty IRQ is detected, the filler 31 idles the processing until an empty IRQ is created.

Next, a description will be made about a case in which the processing contents acquired by the filler 31 are "DMA write strongly ordered" (NIR). When the acquired requests are determined to be NIRs, the filler 31 determines whether an empty entry is present in the NIRQ 32.

When it is determined that an empty entry is present in the NIRQ 32, the filler 31 execute an enqueue process of storing the acquired requests in the empty entry of the NIRQ 32. Moreover, when the enqueue process is executed in a state where all the validities of the respective entries #0 to #7 of the NIRQ 32 are "0," the filler 31 causes the state machine head to transition to the issuable state.

Moreover, when any one of the validities of the respective entries #0 to #7 of the NIRQ 32 is "1," the filler 31 stores the requests in an entry which is subsequent to an entry storing "1" in the validity information and which receives the request latest among the respective entries #0 to #7 of the NIRQ 32.

Moreover, the filler 31 stores the specified address ranges in the entries storing the requests as the address information and stores the specified processing contents in the entries storing the requests as the command information. Moreover, the filler 31 stores "1" in the validity information of the entries storing the requests.

Moreover, the filler 31 retrieves an IRQ having the same address information as the specified address ranges from the IRQs #0 to #7. When an IRQ having the same address information as the specified address ranges is detected through retrieval, the filler 31 determines whether "DMA write weakly ordered" is stored in the command information of the detected IRQs.

When it is determined that the "DMA write weakly ordered" is stored in the command information of the detected IRQs, the filler 31 stores "1" in the storage areas correlated with the detected IRQs among the storage areas of the score boards of the entries of the NIRQ storing the requests. When it is determined that "DMA read" is stored in the command information of the detected IRQs, the filler 31 stores "0" in the storage areas correlated with the detected IRQs among the storage areas of the score boards of the entries of the NIRQ storing the requests.

That is, the filler 31 creates a score board indicating the relationship between the reception order of the requests stored in the NIRQ 32 and the address ranges of the respective requests and the reception order of the requests stored in the respective IRQs #0 to #7 and the address ranges of the respective requests in the entries of the NIRQ storing NIRs. Moreover, when it is determined that no empty entry is present in the NIRQ 32, the filler 31 idles the processing until an empty entry is created in the NIRQ 32.

Next, a case where the processing contents acquired by the filler 31 are "DMA read" (IR) will be described. When the processing contents are determined to be "DMA read," the filler 31 retrieves an IRQ storing the same address information as the specified address ranges from the IRQs #0 to #7. When an IRQ storing the same address information as the specified address ranges is detected through retrieval, the filler 31 determines whether the command information stored in the detected IRQs is "DMA write weakly ordered."

When the command information stored in the detected IRQs is "DMA write weakly ordered," the filler 31 idles the processing until all requests stored in the detected IRQs are issued. That is, the filler 31 idles the processing until the "DMA write weakly ordered" request is transmitted so that the "DMA read" request is not executed earlier than the "DMA write weakly ordered" request.

When the IRQ storing the same address information as the specified address ranges is not detected through retrieval, the filler 31 retrieves an entry storing the same address information as the specified address ranges from the NIRQ 32. When the entry storing the same address information as the specified address ranges is detected through retrieval, the filler 31 idles the processing until the NIRs stored in the detected entry are transmitted by the transmitter 34.

That is, the filler 31 idles the processing until the "DMA write strongly ordered" request is transmitted so that the "DMA read" request is not executed earlier than the "DMA write strongly ordered" request.

When the entry storing the same address information as the specified address ranges is not detected from the NIRQ 32, the filler 31 retrieves an IRQ storing the same requests as the acquired requests from the IRQs #0 to #7. That is, the filler 31 retrieves an IRQ storing the same address information as the specified address ranges and the same command information as the specified processing contents from the IRQs #0 to #7.

When the IRQ storing the same requests as the acquired requests is detected through retrieval, the filler 31 determines whether an empty entry is present in the detected IRQs. When it is determined that an empty entry is present, the filler 31 executes an enqueue process of storing the acquired requests in the detected IRQs and causes the state machine of the entry to transition to the issuable state.

When no empty entry is determined to be present in the detected IRQs, the filler 31 retrieves an empty IRQ. When an empty IRQ is detected, the filler 31 executes an enqueue process of storing the requests in the detected empty IRQ and causes the state machine of the entry storing the requests to transition to the issuable state. When no empty IRQ is detected through retrieval, the filler 31 idles the processing until an empty IRQ is created.

Returning to FIG. 3, the arbiter 33 determines for each of the IRQs #0 to #7 whether the requests stored in the respective IRQs #0 to #7 by the filler 31 are being executed by the system controller 41. Moreover, the arbiter 33 determines whether requests for processing information stored in the memory addresses that are included in the same address range as the address range including the memory addresses storing data to be subjected to processing of the request stored earliest in the NIRQ 32 among the requests stored in the NIRQ 32 are being executed by the system controller 41.

Specifically, the arbiter 33 determines whether the state machine head of the NIRQ 32 is in the issuable state. When it is determined that the state machine head is in the issuable state, the arbiter 33 retrieves an entry storing "1" in the validity information and the NIR received latest from the entries #0 to #7 of the NIRQ 32.

When the entry storing "1" in the validity information and the NIR received latest is detected through retrieval, the arbiter 33 determines whether "1" is stored in the score board of the detected entry. When it is determined that "1" is not stored in the score board, the arbiter 33 notifies the transmitter 34 of the detected entry.

When it is determined that "1" is stored in the score board, the arbiter 33 specifies IRQs correlated with the storage areas storing "1." Moreover, the arbiter 33 retrieves an IRQ that has an entry of which the state machine is in the issuable state and does not have an entry of which the state machine is in the standby state from among the specified IRQs.

When an IRQ satisfying the conditions is detected through retrieval, the arbiter 33 determines whether it will notify the system controller 41 of the read request or the write request using a round-robin arbitration method, for example. When it is determined to notify the system controller 41 of the read request, the arbiter 33 notifies the transmitter 34 of the least full IRQ storing the smallest number of requests among the detected IRQs. When it is determined to notify the system controller 41 of the write request, the arbiter 33 notifies the transmitter 34 of the most full IRQ storing the largest number of requests among the detected IRQs.

When the state machine head of the NIRQ is not in the issuable state, the arbiter 33 retrieves an IRQ having an entry of which the state machine is in the issuable state from the respective IRQs #0 to #7. When an IRQ having an entry of which the state machine is in the issuable state is detected through retrieval, the arbiter 33 retrieves an IRQ that does not have a state machine being in the standby state from among the detected IRQs.

After that, when an IRQ that does not have the state machine being in the standby state is detected through retrieval, the arbiter 33 determines whether it will notify the system controller 41 of the read request or the write request using a round-robbin arbitration method. When it is determined to notify the system controller 41 of the read request, the arbiter 33 searches the score board to determine whether "1" is stored in the storage areas correlated with the detected IRQs.

After that, when it is determined that "1" is stored in the storage areas of the score boards correlated with the detected IRQs, the arbiter 33 notifies the transmitter 34 of the least full IRQ storing the smallest number of requests among the IRQs storing "1" in the correlated storage area. When it is determined that "1" is not stored in the storage areas of the score boards correlated with the detected IRQs, the arbiter 33 notifies the transmitter 34 of the least full IRQ storing the smallest number of requests among the detected IRQs.

When it is determined to notify the system controller 41 of the write request, the arbiter 33 searches the score board to determine whether "1" is stored in the storage areas correlated with the detected IRQs. After that, when it is determined that "1" is stored in the storage areas of the score boards correlated with the IRQs, the arbiter 33 notifies the transmitter 34 of the most full IRQ storing the largest number of requests among the IRQs storing "1" in the correlated storage areas.

When it is determined that "1" not is stored in the storage areas of the score boards correlated with the IRQs, the arbiter 33 notifies the transmitter 34 of the most full IRQ storing the largest number of requests among the detected IRQs.

On the other hand, when an IRQ that has an entry of which the state machine is in the issuable state and does not have an entry of which the state machine is in the standby state is not detected from among the specified IRQs, the arbiter 33 puts the processing into the idle state. After that, the arbiter 33 determines again whether the state machine head of the NIRQ 32 is in the issuable state.

As described above, the arbiter 33 determines whether the requests stored in the respective IRQs #0 to #7 are being executed by the system controller 41 based on the state of the state machine of the respective IRQs #0 to #7. That is, the arbiter 33 determines whether requests for processing addresses included in the same address range as the address ranges of the requests stored in the respective IRQs #0 to #7 are being executed by the system controller 41.

Moreover, the arbiter 33 notifies the transmitter 34 of IRQs storing the requests for processing addresses included in different address ranges from the address ranges of the requests being executed by the system controller 41. Therefore, the I/O controller 10 can transmit the requests received from the I/O device 40 to the system controller 41 without transmitting a plurality of requests for processing addresses included in the same address range. Therefore, the I/O controller 10 can allow the system controller 41 to execute processing efficiently without suspending requests.

Moreover, the arbiter 33 determines whether the "DMA write weakly ordered" (IR) which is designed for processing the same address range as the requests stored in the NIRQ 32 and which is received earlier than the requests stored in the NIRQ 32 is stored in an IRQ using the score board. Moreover, when the "DMA write weakly ordered" (IR) which is designed for processing the same address range as the requests stored in the NIRQ 32 and which is received earlier than the requests stored in the NIRQ 32 is stored in an IRQ, the arbiter 33 transmits the "DMA write weakly ordered" (IR) received earlier to the system controller 41.

That is, the arbiter 33 determines based on the score boards of the respective entries #0 to #7 of the NIRQ 32 whether IRs for processing information stored in the memory addresses included in the same address range as the request stored the earliest among the requests stored in the NIRQ 32 are being executed by the system controller 41. Therefore, the arbiter 33 maintains the execution order of the requests stored in the NIRQ 32 and does not transmit NIRs and IRs for processing the same address range to the system controller 41. As a result, the I/O controller 10 can allow the system controller 41 to execute processing efficiently.

The transmitter 34 transmits requests which are determined by the arbiter 33 to be not being executed and which are stored in the IRQs or the NIRQ 32 to the system controller 41. Specifically, the transmitter 34 receives the notification of IRQs storing the entries or the requests stored in the NIRQ 32. In this case, the transmitter 34 determines whether an outstanding value indicating the number of requests being executed by the system controller 41 is larger than a predetermined value.

When the outstanding value is determined to be smaller than the predetermined value, the transmitter 34 transmits the request notified from the arbiter 33 to the system controller 41. That is, the transmitter 34 transmits the NIR stored in the entry notified from the arbiter 33 or a request stored the earliest among the requests stored in the IRQ notified from the arbiter 33 to the system controller 41.

When the outstanding value is determined to be not smaller then the predetermined value, the transmitter 34 waits until a response of the request transmitted to the system controller 41 is received by the receiver 35 to be described later. Moreover, when a signal indicating acknowledgement of receipt of a response is received from the receiver 35, the transmitter 34 transmits the request notified from the arbiter 33 to the system controller 41. That is, the transmitter 34 transmits a request stored in the entry notified from the arbiter 33 or a request stored the earliest among the requests stored in the IRQ notified from the arbiter 33 to the system controller 41.

When transmitting the requests stored in the IRQs to the system controller 41, the transmitter 34 causes the state machine of the entries storing the transmitted requests to transition to the standby state. Moreover, when all requests stored in one IRQ have been issued, the transmitter 34 stores "0" in all storage areas of the score board correlated with the IRQ having issued all requests. When transmitting the requests stored in the NIRQ 32 to the system controller 41, the transmitter 34 causes the state machine head of the NIRQ 32 to transition to the standby state.

The receiver 35 receives a response of the request transmitted to the system controller 41. Specifically, a response from the system controller 41 is received, the receiver 35 transmits a signal indicating acknowledgement of receipt of the response to the transmitter 34. Moreover, the receiver 35 analyzes the received response to determine whether the response is a response to an NIR.

When the received response is determined to be a response to the NIR, the receiver 35 executes a dequeue process of storing "0" in the validity information of the entry storing the earliest request among the entries #0 to #7 of the NIRQ 32. On the other hand, when the received response is determined to be not a response to the NIR, the receiver 35 specifies the request corresponding to the received response. Moreover, the receiver 35 determines an IRQ and an entry storing the specified request and causes the state machine of the entry of the determined IRQ to transition to the invalid state.

For example, the filler 31, the arbiter 33, the transmitter 34, and the receiver 35 are electronic circuits. Here, as an example of the electronic circuits, integrated circuits such as an application specific integrated circuit (ASIC) or a field programmable gate array (FPGA), a central processing unit (CPU), a micro processing unit (MPU), and the like can be used.

Moreover, the FIFO 20, the respective IRQs #0 to #7, and the NIRQ 32 can be formed using a register file formed of a plurality of flip-flops or latches, a semiconductor memory device such as a random access memory (RAM), or a storage device such as a hard disk or an optical disc.

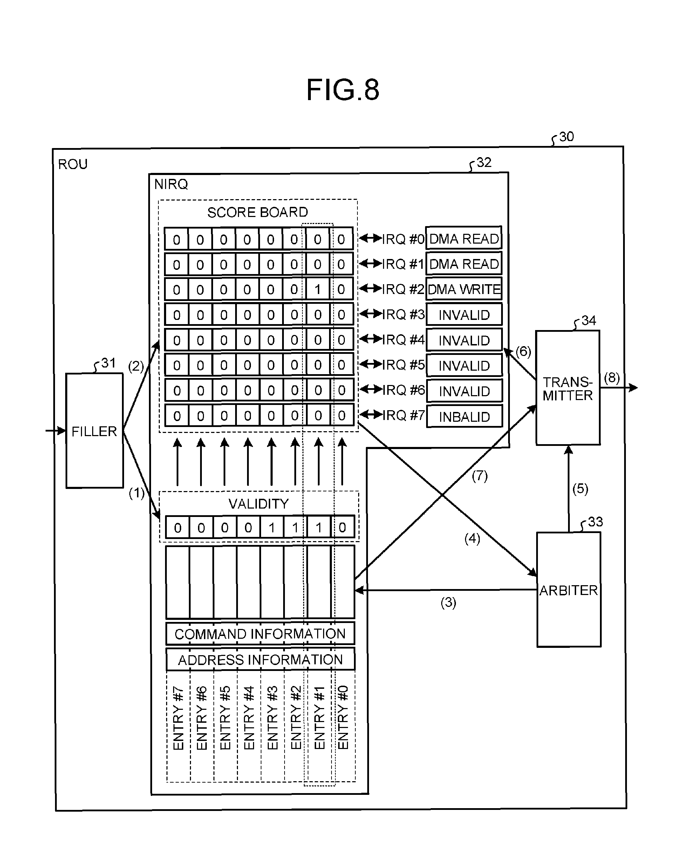

Next, the flow of an enqueue process and a transmission process using the score board will be described with reference to FIG. 8. FIG. 8 is a diagram illustrating the flow of an enqueue process and a transmission process. In the example illustrated in FIG. 8, it is assumed that a new NIR is stored in the NIRQ by the filler 31. Moreover, it is assumed that one request for processing a memory address included in the address range including the memory address storing the data to be subjected to processing of the newly stored NIR is stored in the IRQ #2.

As indicated by (1) in FIG. 8, when storing a request in the entry #1 of the NIRQ 32, the filler 31 stores "1" in the validity information of the entry #1. Moreover, the filler 31 specifies the IRQ #2 having the same address information as the address range of the request stored in the entry #1. Moreover, as indicated by (2) in FIG. 8, the filler 31 stores "1" in the storage area correlated with the IRQ #2 among the score boards of the entry # 1.

Moreover, as indicated by (3) in FIG. 8, the arbiter 33 detects that "1" is stored in the validity information of the entry #1. Therefore, as indicated by (4) in FIG. 8, the arbiter 33 checks the score boards of the entry #1 to detect that "1" is stored in the storage area correlated with the IRQ #2. That is, the arbiter 33 determines that a request which is designed to process the same address range as the request stored in the entry #1 of the NIRQ 32 and which is received earlier than the request stored in the entry #1 of the NIRQ 32 is stored in the IRQ #2.

Therefore, as indicated by (5) in FIG. 8, the arbiter 33 notifies the transmitter 34 of the request stored in the IRQ #2. Therefore, as indicated by (6) in FIG. 8, the transmitter 34 transmits the request stored in the IRQ #2 to the system controller 41 and stores "0" in all storage areas correlated with the IRQ #2 among the score boards of the respective entries #0 to #7 of the NIRQ 32. After that, as indicated by (7) and (8) in FIG. 8, the transmitter 34 transmits the request stored in the entry #1 of the NIRQ 32 to the system controller 41.

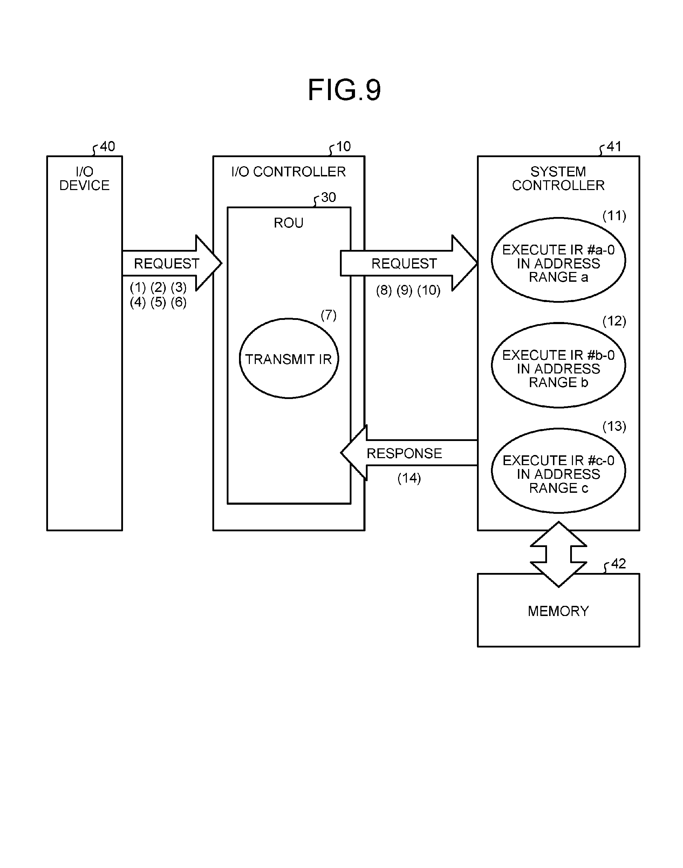

Next, the flow of a process in which the I/O controller 10 transmits a request will be described with reference to FIG. 9. FIG. 9 is a diagram illustrating a process in which the I/O controller 10 according to the second embodiment transmits a request in accordance with the address range of the request.

For example, as indicated by (1) and (2) in FIG. 9, the I/O controller 10 receives IR #a-0, IR #a-1, and the like as requests for processing addresses included in an address range "a." Moreover, as indicated by (3) and (4) in FIG. 9, the I/O controller 10 receives IR #b-0, IR #b-1, and the like as requests for processing addresses included in an address range "b." Moreover, as indicated by (5) and (6) in FIG. 9, the I/O controller 10 receives IR #c-0, IR #c-1, and the like as requests for processing addresses included in an address range "c."

In this case, the I/O controller 10 transmits a plurality of requests of which the memory addresses storing the processing target information are not included in the same address range to the system controller 41. That is, as indicated by (7) to (10) in FIG. 9, the I/O controller 10 transmits the requests IR #a-0, IR #b-0, IR #c-0 to the system controller 41. Therefore, as indicated by (11) to (14) in FIG. 9, the system controller 41 can execute the received requests IR #a-0, IR #b-0, IR #c-0 in parallel without suspending a subsequent request and transmit responses to the I/O controller 10.

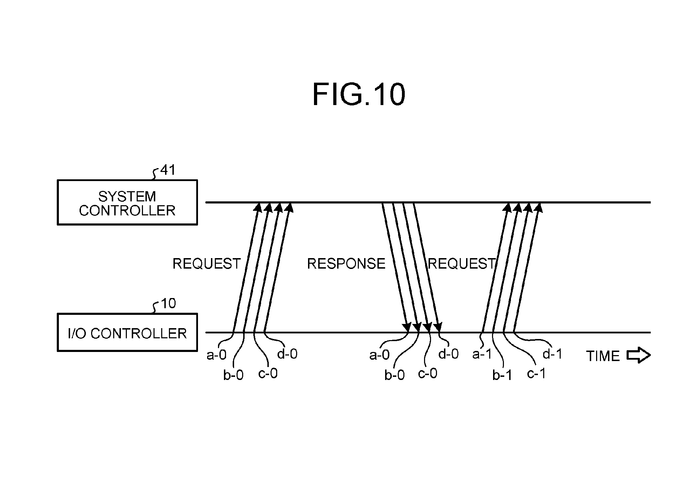

FIG. 10 is a time chart illustrating the flow of processing executed by the I/O controller 10 according to the second embodiment. In the example illustrated in FIG. 10, the I/O controller 10 transmits requests IR #a-0, IR #b-0, IR #c-0, and IR #d-0, which are requests for processing different address ranges, to the system controller 41.

Therefore, the system controller 41 executes the respective requests IR #a-0, IR #b-0, IR #c-0, and IR #d-0 in parallel without suspension and transmits responses to the I/O controller 10. Moreover, responses to the respective requests are received, the I/O controller 10 transmits IR #a-1, IR #b-1, IR #c-1, and IR #d-1, which are requests for processing different address ranges, to the system controller 41.

That is, the I/O controller 10 transmits requests for processing different address ranges to the system controller 41. Therefore, the I/O controller 10 can allow the system controller 41 to execute processing efficiently without suspending requests.

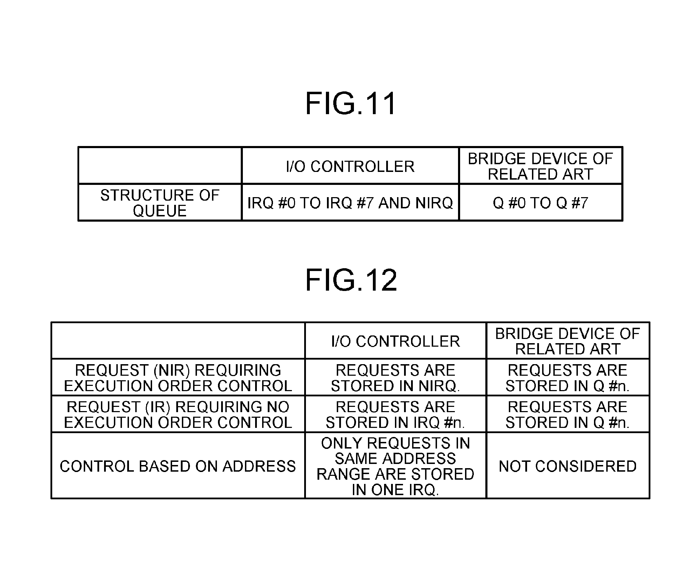

Next, the queues possessed by the I/O controller 10 according to the embodiment and the bridge device of the related art will be described with reference to FIG. 11. FIG. 11 is a diagram illustrating queues. In the example illustrated in FIG. 11, the bridge device of the related art has a plurality of queues Q #0 to Q #7 which are memory areas for storing IRs and NIRs without distinction. Therefore, the bridge device of the related art performs a process of determining whether requests stored in the respective queues Q #0 to #7 are IRs or NIRs.

On the other hand, as illustrated in FIG. 11, the I/O controller 10 of the embodiment IRQs #0 to #7 and the NIRQ 32 for individually storing IRs and NIRs, respectively. Therefore, the I/O controller 10 can perform appropriate processing without determining whether the requests stored in the IRQs #0 to #7 and the NIRQ 32 are IRs or NIRs. As a result, the I/O controller 10 can perform processing more efficiently.

Next, the enqueue process performed by the I/O controller 10 of the embodiment and the bridge device of the related art will be described with reference to FIG. 12. FIG. 12 is a diagram illustrating the enqueue process. In the example illustrated in FIG. 12, the bridge device of the related art stores requests in a memory area Q #n without distinguishing NIRs which are requests that require execution order control from IRs which are requests that do not require execution order control. Moreover, the bridge device of the related art does not consider the memory address storing the data to be subjected to processing of the respective requests.

On the other hand, as illustrated in FIG. 12, the I/O controller 10 of the embodiment stores NIRs which are requests that require execution order control in the NIRQ 32 and stores IRs which are requests that does not require execution order control in an IRQ #n corresponding to the address range. Moreover, the I/O controller 10 stores only requests for processing addresses in the same address range in one IRQ. Therefore, the I/O controller 10 can efficiently transmit requests for processing addresses in different address ranges to the system controller 41.

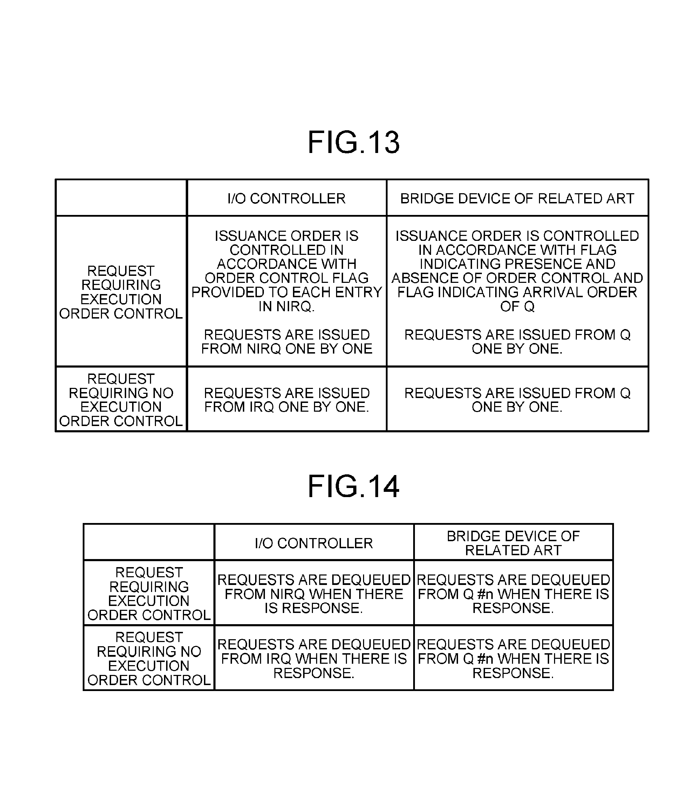

Next, the request issuing process performed by the I/O controller 10 of the embodiment and the bridge device of the related art will be described with reference to FIG. 14. In the example illustrated in FIG. 13, the bridge device of the related art transmits requests (NIRs) that require execution order control in the order which is determined by a flag indicating the necessity of order control and a flag indicating the arrival order of the requests in the respective queues Q. Moreover, the bridge device of the related art issues requests (IRs) which do not require execution order control from the respective queues Q one by one.

On the other hand, the I/O controller 10 of the embodiment receives requests stored in the NIRQ 32, namely requests (NIRs) that require execution order control from the NIRQ one by one. Therefore, responses to the NIRs from the system controller 41 are received, the I/O controller 10 can determine immediately an NIR to be transmitted next and transmit the determined NIR to the system controller 41. Moreover, since one IR is transmitted from one IRQ to the system controller 41, the I/O controller 10 can determine immediately an IR to be transmitted next.

Moreover, since NIRs and IRs are transmitted in the order determined by the order control flags of the score boards possessed by the respective entries #0 to #7 of the NIRQ 32, the I/O controller 10 prevents an NIR and a IR for processing addresses included in the same address range from being transmitted to the system controller 41 at the same time. As a result, the I/O controller 10 can reduce the time when the system controller 41 does not perform processing and cause the system controller 41 to execute processing more efficiently.

Next, the dequeue process performed by the I/O controller 10 of the embodiment and the bridge device of the related art will be described with reference to FIG. 14. FIG. 14 is a diagram illustrating the dequeue process. In the example illustrated in FIG. 14, when a response to a request (NIR) that requires execution order control and a request (IR) that does not require execution order control are received, the bridge device of the related art dequeues a request from a queue Q #n storing the request corresponding to the received response.

On the other hand, a response to a request (IR) that does not require execution order control is received, the I/O controller 10 dequeues a request from an IRQ storing the request corresponding to the received response. Moreover, a request (NIR) that requires execution order control is received, the I/O controller 10 does not retrieve a memory area storing a request corresponding to the received response but just store "0" in the validity information of the entry storing the corresponding request. That is, a response to an NIR transmitted to the system controller 41 is received, the I/O controller 10 can finish the dequeue process by just storing "0" in the validity information of the entry storing the request corresponding to the received response among the entries of the NIRQ 32. As a result, the I/O controller 10 can execute the dequeue process with a small processing amount.

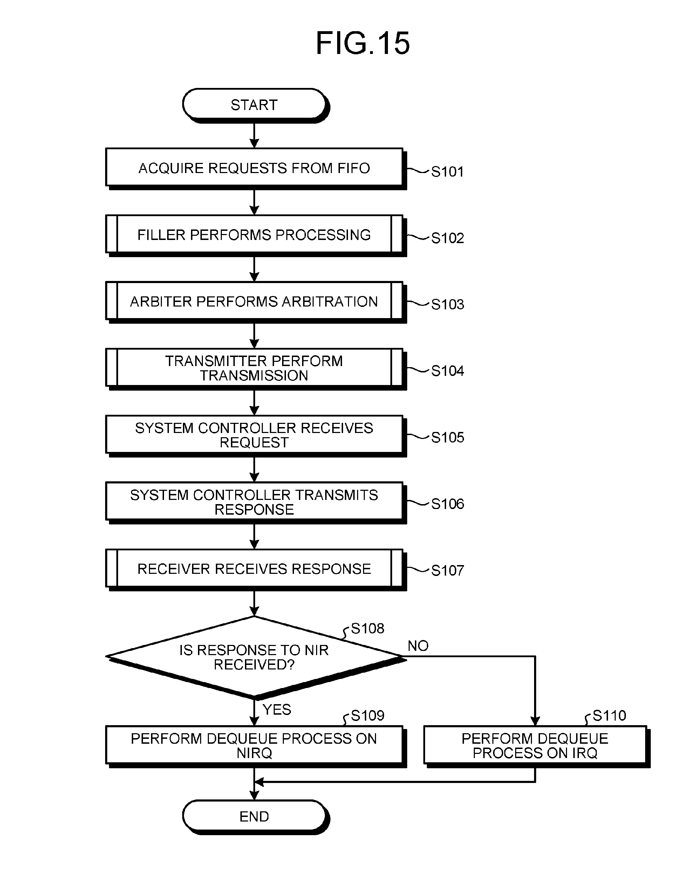

Processing of Transmission Device
Next, the flow of processing executed by the ROU 30 will be described with reference to FIG. 15. FIG. 15 is a flowchart illustrating the flow of processing executed by the ROU 30 according to the second embodiment. In the example illustrated in FIG. 15, the ROU 30 acquires requests from the FIFO 20 (step S101).

Subsequently, the ROU 30 performs an enqueue process of storing the acquired requests in any one of the IRQs #0 to #7 or the NIRQ 32 using the filler 31 (step S102). Subsequently, the ROU 30 performs an arbitration process of determining a request to be transmitted among the requests stored in the IRQs #0 to #7 or the NIRQ 32 using the arbiter 33 (step S103). Subsequently, the ROU 30 transmits a request determined in step S103 to the system controller 41 using the transmitter 34 (step S104).

Here, when the system controller 41 transmits a response of the request received from the ROU 30 (steps S105 and S106), the ROU 30 receives the response transmitted by the system controller 41 using the receiver 35 (step S107). Subsequently, the ROU 30 determines whether the received response is a response to an NIR (step S108).

When the received response is determined to be a response to the NIR (step S108: Yes), the ROU 30 executes a dequeue process on the NIRQ 32 (step S109). On the other hand, the received response is determined to be not a response to the NIR (step S108: No), the ROU 30 executes a dequeue process on IRQs (step S110). After that, the ROU 30 ends the processing.

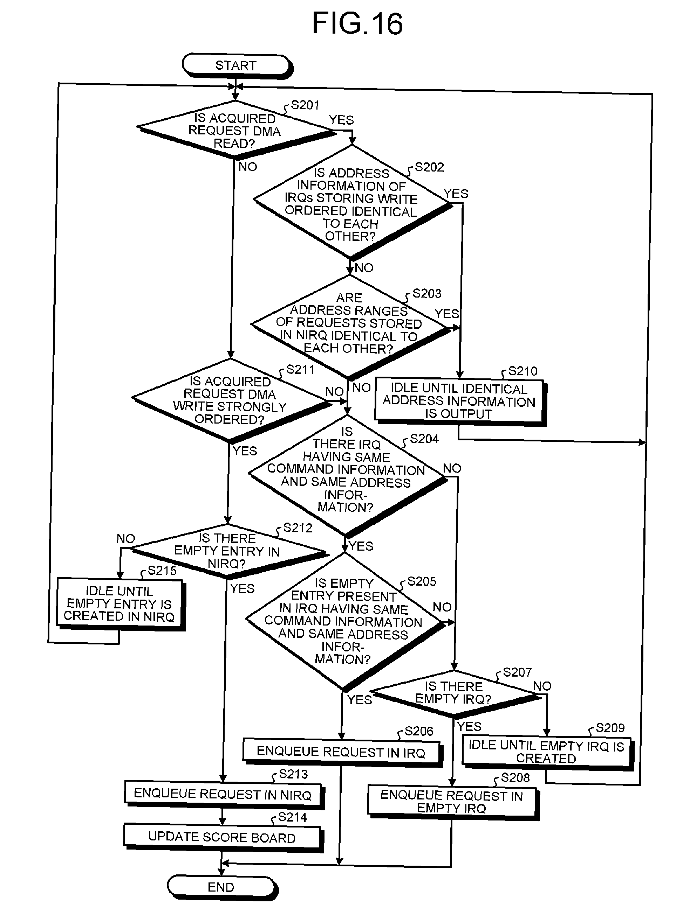

Next, the flow of processing executed by the filler 31 will be described with reference to FIG. 16. FIG. 16 is a flowchart illustrating the flow of processing executed by the filler 31. In the example illustrated in FIG. 16, a request from the FIFO 20 is received, the filler 31 determines whether the acquired request is "DMA read" (step S201). When the acquired request is determined to be "DMA read" (step S201: Yes), the filler 31 determines whether the address range including a memory area storing data to be subjected to processing of the acquired request is identical to the address information of the IRQ storing the request "DMA write weakly ordered" (step S202).

Subsequently, when the address range is determined to be not identical to the address information (step S202: No), the filler 31 determines whether the address range of the acquired request is identical to the address range of each of the respective requests stored in the NIRQ 32 (step S203). When the two address ranges are determined to be not identical (step S203: No), the filler 31 determines whether there is an IRQ having the same command information and the same address information as the acquired request (step S204).

When it is determined that there is an IRQ having the same command information and the same address information as the acquired request (step S204: Yes), the filler 31 determines whether an empty entry is present in the IRQ having the same command information and the same address information as the acquired request (step S205). When it is determined that an empty entry is present in the IRQ having the same command information and the same address information as the acquired request (step S205: Yes), the filler 31 executes an enqueue process of storing the acquired request in the empty entry (step S206). After that, the filler 31 ends the processing.

On the other hand, when it is determined that an empty entry is not present in the IRQ having the same command information and the same address information as the acquired request (step S205: No), the filler 31 determines whether there is an empty IRQ (step S207). When it is determined that there is an empty IRQ (step S207: Yes), the filler 31 executes an enqueue process of storing the acquired request in the empty IRQ (step S208). After that, the filler 31 ends the processing.

On the other hand, when it is determined that there is no empty IRQ (step S207: No), the filler 31 idles the processing until an empty IRQ is created (step S209). When the address range of the acquired request is determined to be identical to the address information of any one of the respective IRQs #0 to #7 (step S202: Yes), the filler 31 idles the processing until all requests stored in the IRQs having the identical address information are output (step S210).

When the address range of the acquired request is determined to be identical to the address range of the request stored in the NIRQ 32 (step S203: Yes), the filler 31 idles the processing until all requests having the identical address range among the requests stored in the NIRQ 32 are output (step S210).

When the acquired request is determined to be "DMA read" (step S201: No), the filler 31 determines whether the acquired request is "DMA write strongly ordered" (step S211). When the acquired request is determined to be "DMA write strongly ordered" (step S211: Yes), the filler 31 determines whether there is an empty entry in the NIRQ 32 (step S212).

After that, when it is determined that there is an empty entry in the NIRQ 32 (step S212: Yes), the filler 31 executes an enqueue process of storing the acquired request in the NIRQ 32 (step S213). Moreover, the filler 31 updates the score board (step S214) and then ends the processing.

When it is determined that there is no empty entry in the NIRQ 32 (step S212: No), the filler 31 idles the processing until an empty entry is created in the NIRQ 32 (step S215). When the acquired request is determined to be not "DMA write strongly ordered" (step S211: No), the filler 31 executes the processes of steps S204 to S209 and enqueues requests in IRQs. When it is determined that there is no IRQ having the same command information and the same address information as the acquired request (step S204: No), the filler 31 determines whether there is an empty IRQ (step S207).

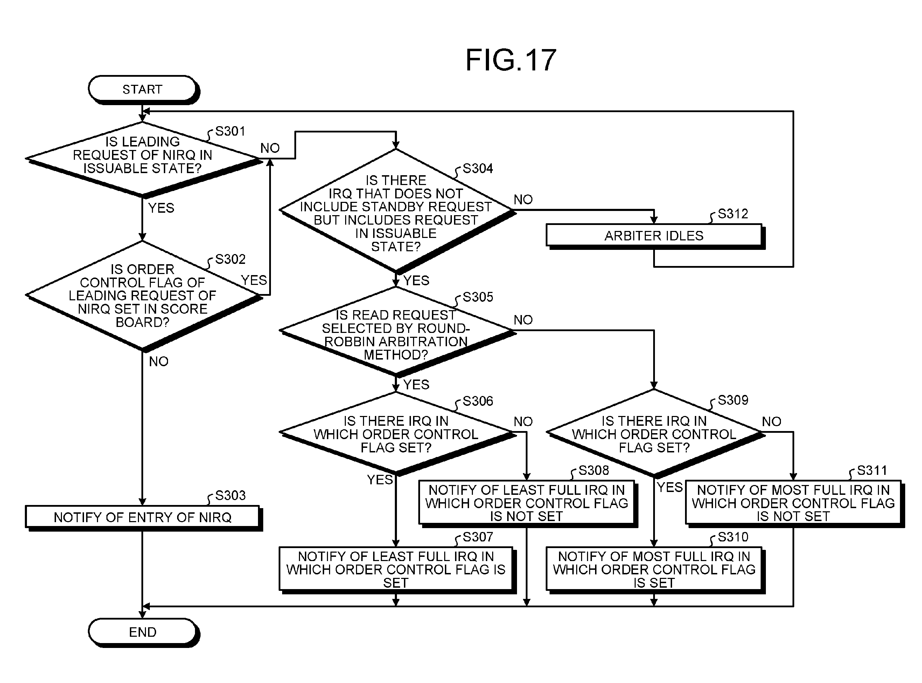

Next, the flow of processing executed by the arbiter 33 will be described with reference to FIG. 17. FIG. 17 is a flowchart illustrating the flow of processing executed by the arbiter 33. In the example illustrated in FIG. 17, first, the arbiter 33 checks the state machine head of the NIRQ 32 to determine whether a leading request of the NIRQ 32 is in the issuable state (step S301).

Subsequently, when it is determined that the leading request of the NIRQ 32 is in the issuable state (step S301: Yes), the arbiter 33 determines whether the order control flag is set to "1" in the score board of the entry storing the leading request (step S302). When it is determined that the order control flag is not set to "1" in the score board of the entry storing the leading request (step S302: No), the arbiter 33 notifies the transmitter 34 of the entry storing the leading request of the NIRQ 32 (step S303). After that, the arbiter 33 ends the processing.

When it is determined that the leading request of the NIRQ 32 is not in the issuable state (step S301: No), the arbiter 33 determines whether there is an IRQ that does not include a standby request but includes a request in the issuable state (step S304). When it is determined that there is an IRQ that does not include a standby request but includes a request in the issuable state (step S304: Yes), the arbiter 33 determines whether it will transmit a read request to the system controller 41 using a round-robbin arbitration method (step S305).

When it is determined to transmit a read request (step S305: Yes), the arbiter 33 checks the score board to determine whether there is an IRQ in which the order control flag is set (step S306). When it is determined that there is an IRQ in which the order control flag is set (step S306: Yes), the arbiter 33 notifies the transmitter 34 of the least full IRQ storing the smallest number of requests among the IRQs in which the order control flag is set (step S307). After that, the arbiter 33 ends the processing.

When it is determined that there is no IRQ in which the order control flag is set in the score board (step S306: No), the arbiter 33 notifies the transmitter 34 of the least full IRQ storing the smallest number of requests among the IRQs in which the order control flag is not set (step S308). After that, the arbiter 33 ends the processing.

When it is determined to not transmit the read request, namely to transmit a write request (step S305: No), the arbiter 33 checks the score board to determine whether there is an IRQ in which the order control flag is set (step S309). When it is determined that there is an IRQ in which the order control flag is set (step S309: Yes), the arbiter 33 notifies the transmitter 34 of the most full IRQ storing the largest number of requests among the IRQs in which the order control flag is set (step S310). After that, the arbiter 33 ends the processing.

When it is determined that there is no IRQ in which the order control flag is set (step S309: No), the arbiter 33 notifies the transmitter 34 of the most full IRQ storing the largest number of requests among the IRQs in which the order control flag is not set (step S311). After that, the arbiter 33 ends the processing.

When it is determined that there is no IRQ that does not include a standby request but includes a request in the issuable state (step S304: No), the arbiter 33 idles the processing (step S312). When it is determined that the order control flag is set to "1" in the score board of the entry storing the leading request (step S302: Yes), the arbiter 33 determines whether there is an IRQ that does not include a standby request but includes a request in the issuable state (step S304). After that, the processes subsequent to step S304 are executed.

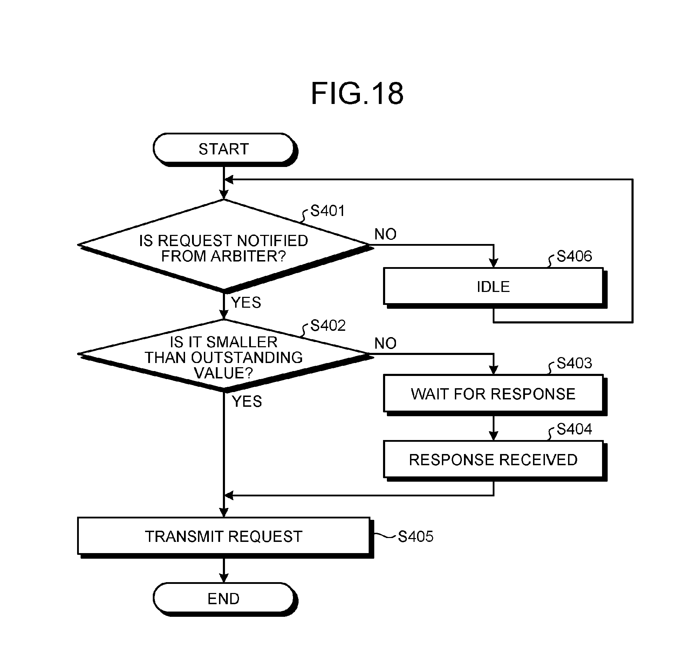

Next, the flow of processing executed by the transmitter 34 will be described with reference to FIG. 18. FIG. 18 is a diagram illustrating the flow of processing executed by the transmitter 34. In the example illustrated in FIG. 18, the transmitter 34 determines whether a request to be transmitted is notified from the arbiter 33 (step S401).

When a request from the arbiter 33 is received (step S401: Yes), the transmitter 34 determines whether the number of requests which have been transmitted from the transmitter 34 to the system controller 41 and in which no response has been acquired from the system controller 41 is smaller than an outstanding value (step S402). After that, when the number of requests which have been transmitted from the transmitter 34 to the system controller 41 and in which no response has been acquired from the system controller 41 is determined to be smaller than an outstanding value (step S402: Yes), the transmitter 34 transmits the request notified from the arbiter 33 to the system controller 41 (step S405). After that, the transmitter 34 ends the processing.

On the other hand, when the number of requests which have been transmitted from the transmitter 34 to the system controller 41 and in which no response has been acquired from the system controller 41 is determined to be not smaller than an outstanding value (step S402: No), the transmitter 34 waits for a response of the request transmitted to the system controller 41 (step S403). When a response from the system controller 41 is received (step S404), the transmitter 34 transmits the request notified from the arbiter 33 (step S405). After that, the transmitter 34 ends the processing. When no request is received from the arbiter 33 (step S401: No), the transmitter 34 waits for (idles) a request from the arbiter 33 (step S406).

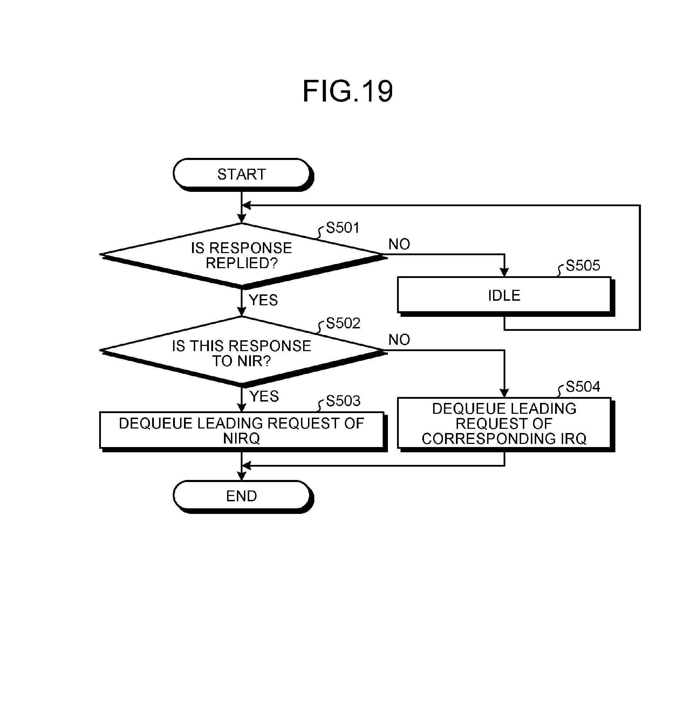

Next, the flow of processing executed by the receiver 35 will be described with reference to FIG. 19. FIG. 19 is a flowchart illustrating the flow of processing executed by the receiver 35. In the example illustrated in FIG. 19, the receiver 35 performs a process of receiving a response from the system controller 41 to determine whether a response is replied (step S501).

When a response is replied from the system controller 41 (step S501: Yes), the receiver 35 determines whether the response is a response to an NIR (step S502). After that, when the response is determined to be a response to an NIR (step S502: Yes), the receiver 35 dequeues the leading request stored in the NIRQ 32 (step S503). When the response is determined to be not a response to an NIR (step S502: No), the receiver 35 dequeues the leading request of the corresponding IRQ (step S504).

When it is determined that no response is replied from the system controller 41 (step S501: No), the receiver 35 waits (idles) until a response is received (step S505).

Effects of Second Embodiment
As described above, the I/O controller 10 includes a plurality of IRQs #0 to #7. Moreover, the I/O controller 10 specifies the address ranges including the memory addresses storing data to be subjected to processing of the received requests and stores the requests in different IRQs for each of the specified address ranges. Moreover, the I/O controller 10 determines whether the requests stored in the IRQs #0 to #7 are being executed by the system controller 41. When the system controller 41 transmits requests which are stored in the IRQs and which are determined to be not being executed by the system controller 41 to the system controller 41. That is, the system controller 41 transmits a plurality of requests for processing different address ranges to the system controller 41.

Therefore, the I/O controller 10 can allow the system controller 41 to execute processing efficiently. That is, since the system controller 41 can execute a plurality of requests for processing different address ranges in parallel, the system controller 41 can execute processing without rejecting snooping associated with subsequent requests. As a result, the system controller 41 can execute processing efficiently without suspending subsequent requests.

Moreover, the I/O controller 10 includes the NIRQ 32, and stores received requests in the NIRQ 32 when the received requests are requests (NIRs) that require execution order control. Moreover, when outputting the leading request stored in the NIRQ 32 to the system controller 41, the I/O controller 10 determines whether a request for processing the same address range as the leading request of the NIRQ 32 is being executed. After that, when it is determined that no request for processing the same address range as the leading request of the NIRQ 32 is being executed by the system controller 41, the I/O controller 10 transmits the leading request of the NIRQ 32 to the system controller 41.

Therefore, when relaying NIRs and IRs, the I/O controller 10 can transmit a plurality of requests for processing different address ranges to the system controller 41. As a result, the I/O controller 10 can allow the system controller 41 to execute processing efficiently.

Moreover, the I/O controller 10 includes the NIRQ 32 and the IRQs #0 to #7 for individually storing NIRs and IRs, respectively. Therefore, when transmitting requests, the I/O controller 10 can transmit appropriate types of requests without determining the requests stored in the NIRQ 32 or the IRQs #0 to #7 are NIRs or IRs. That is, the I/O controller 10 can execute the transmission process more efficiently.

Moreover, the I/O controller 10 creates the score board indicating the relationship between the address ranges of the requests stored in the NIRQ 32 and the reception order of the requests and the address ranges of the requests stored in the respective IRQs #0 to #7 and the reception order of the requests. When transmitting the leading request of the NIRQ 32, the I/O controller 10 determines whether there is an IR which is designed for processing the same address range as the leading request and which is received earlier than the leading request using the score board. Therefore, when receiving the leading request of the NIRQ 32, the I/O controller 10 can easily perform the process of maintaining the execution order of the leading request and checking the address information stored in the respective IRQs #0 to #7 to thereby execute the transmission process efficiently.

Furthermore, the I/O controller 10 includes the receiver 35 for receiving requests from the system controller 41 and transmits a new request to the system controller 41 when the receiver 35 receives a response. Therefore, the I/O controller 10 can allow the system controller 41 to always execute a predetermined (outstanding) number of requests.

[c] Third Embodiment
While the embodiments of the invention have been described above, the invention may be implemented in various different forms other than the above-described embodiments. Another embodiment of the invention will be described as a third embodiment.

(1) Number of IRQs
The above-described I/O controller 10 includes eight IRQs #0 to #7. However, the number of IRQs is not limited to this, but any number of IRQs may be formed. Moreover, the respective IRQs #0 to #7 have four entries. However, the number of entries is not limited to this but any number of entries may be formed. Furthermore, the NIRQ 32 includes eight entries #0 to #7. However, the number of entries of the NIRQ 32 is not limited to this, but any number of entries may be formed.

(2) Requests
The above-described I/O controller 10 transmits direct memory access (DMA) requests and transmits the received requests to the system controller 41. However, the type of requests is not limited to this, requests of any format other than DMA may be processed. Moreover, the above-described I/O device 40 transmits the DMA request received from a hard disk drive (HDD) to the I/O controller 10. However, the source that issues the requests is not limited to this, but the I/O device 40 may transmit requests for processing a memory issued by any device to the I/O controller 10.

(3) Size of Address Range
The above-described system controller 41 caches information stored in the memory 42 by 256-bit units. Therefore, the I/O controller 10 sets the size of one address range to 256 bits. However, the size of the address range is not limited to this. For example, when the system controller 41 caches information stored in the memory 42 in 512-bit units, the I/O controller 10 may set the size of one address range to 512 bits.

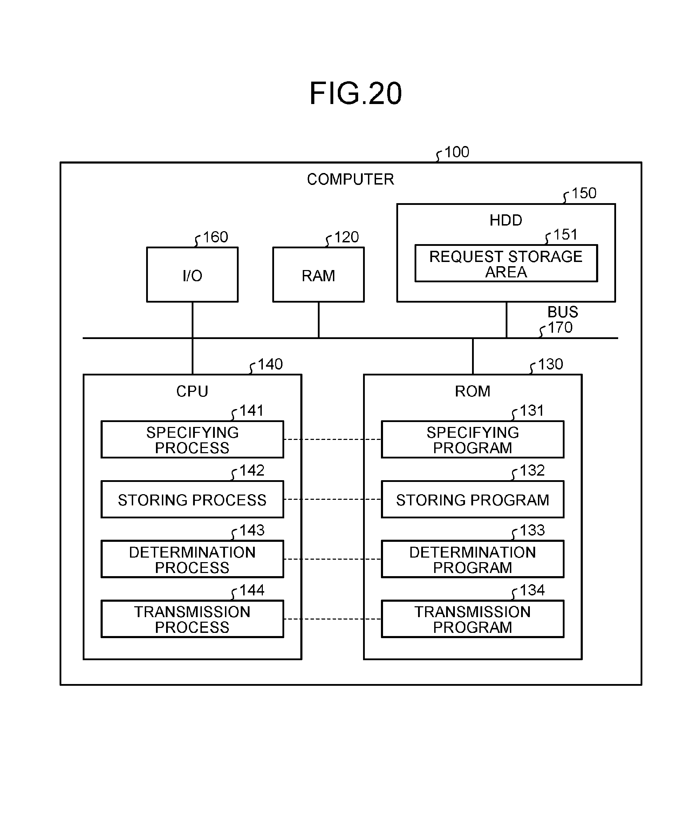

(4) Program
The transmission device 1 of the first embodiment and the I/O controller 10 of the second embodiment have been described to realize various processes using hardware. However, a method of realizing the transmission device or the I/O controller is not limited to this, but the transmission device or the I/O controller may be realized by causing a computer of the transmission device to execute a program prepared in advance. In the following description, an example of a computer that executes a program having the same function as the transmission device described in the first embodiment will be described with reference to FIG. 20. FIG. 20 is a diagram illustrating an example of a computer that executes a transmission program.

A computer 100 illustrated in FIG. 20 includes a random access memory (RAM) 120, a read only memory (ROM) 130, and a hard disk drive (HDD) 150 which are connected by a bus 170. Moreover, the computer 100 illustrated in FIG. 20 includes a central processing unit (CPU) 140 which is connected to the bus 170. Furthermore, the bus 170 is connected to an input/output (I/O) 160 for transmitting and receiving requests.

In the HDD 150, a request storage area 151 is set in advance. Here, the request storage area 151 includes a plurality of independent memory areas and have the same function as the memory units A to C illustrated in FIG. 1. In the ROM 130, a specifying program 131, a storing program 132, a determination program 133, and a transmission program 134 are stored in advance. The CPU 140 reads the respective programs 131 to 134 from the ROM 130 and executes the programs 131 to 134, whereby the respective programs 131 to 134 function as a specifying process 141, a storing process 142, a determination process 143, and a transmission process 144 in the example illustrated in FIG. 20. The respective processes 141 to 144 perform the same functions as the respective units 5 to 8 illustrated in FIG. 1. Moreover, the respective processes 141 to 144 can also perform functions equivalent to those of the respective units of the second or third embodiment.

In addition, the transmission program described in the present embodiment can be realized by causing a computer such as a personal computer or a workstation to execute a program prepared in advance. This program can be distributed through a network such as the Internet. Moreover, this program is recorded on a computer-readable recording medium such as a HD, a flexible disk (FD), a compact disk read only memory (CD-ROM), a magneto-optical disk (MO), or a digital versatile disk (DVD). Furthermore, this program can be executed when a computer reads the program from a recording medium.

According to an aspect of the embodiments discussed therein, processing on the information stored in memories is executed efficiently.

## Claims

1. A transmission device (30) comprising:
a first memory unit (32) that stores requests which require order controlled execution among requests for processing information stored in a memory;
a plurality of second memory units that store requests which do not require order controlled execution among the requests, each of the second memory units corresponding to a different address range of the memory segmented to have a size of a unit of process execution;
an order control determination unit (31) that analyzes a request received from a first device (40) to determine whether the received request is a request that requires order controlled execution;
a specifying unit (31) that analyzes a request received from the first device (40) to specify an address range including a memory address storing data to be subjected to the requested processing;
a storing unit (31) that stores the request in the first memory unit (32) when the order control determination unit (31) determined that the request is a request that requires order controlled execution, and stores the request in a second memory unit corresponding to the specified address range when the order control determination unit (31) determined that the request is a request that does not require order controlled execution;
a determination unit (33) that determines for each of the second memory units whether the request stored in the second memory unit is being executed by a second device; and
a transmission unit (34) that transmits a request which is stored in the second memory unit to the second device when the determination unit (33) determines that the request is not being executed by the second device (41).

2. The transmission device (30) according to claim 1, wherein
the determination unit (33) specifies an address range including a memory address storing data to be subjected to processing of a request stored earliest among the requests stored in the first memory unit (32) to determine whether another request for processing data stored in a memory address included in the specified address range is being executed by the second device (41), and
the transmission unit (34) transmits a request stored earliest among the requests stored in the first memory unit (32) when the determination unit determined that the request for processing data stored in the memory address included in the specified address range is not being executed by the second device.

3. The transmission device (30) according to claim 2, further comprising:
a creating unit (31) that creates score board information indicating the relationship between the reception order of the requests stored in the first memory unit (32) and the reception order of the requests stored in the respective second memory units, and the relationship between the address range including the memory addresses storing data to be subjected to the processing of the request stored in the first memory unit (32) and the address range including the memory addresses storing data to be subjected to the processing of the request stored in the respective second memory units,
wherein the determination unit (33) determines based on the score board information created by the creating unit (31) whether a request for processing information stored in a memory address included in the same address range as the request stored earliest among the requests stored in the first memory unit (32) and which is received earlier than the request stored in any of the second memory units, and, when it is determined that there is a second memory unit storing the request, determines whether the request stored in the determined second memory unit is being executed by the second device (41).

4. The transmission device (30) according to any one of claims 1 to 3, further comprising:
a response receiving unit (35) that receives a response of the request transmitted to the second device (41) from the second device(41),
wherein the transmission unit (34) transmits a new request to the second device (41) when a response is received by the response receiving unit (35).

5. A transmission method executed by a transmission device (30), the method comprising:
analyzing a request received from a first device (40) to determine whether the request is a request that requires order controlled execution;
specifying an address range of a memory including a memory address storing data to be subjected to the requested processing, the address range being segmented into a size which is the unit of process execution, by analyzing the request received from the first device (40);
storing the received request in an order controlled memory unit (32) when the received request is a request that requires order controlled execution and storing the received request in a non-order controlled memory unit corresponding to the specified address ranges when the received request is a request that does not require order controlled execution;
determining for each of the non-order controlled memory unit whether the request stored therein is being executed by a second device (41) ; and
transmitting a request which is stored in the non-order controlled memory unit to the second device when the stored request is determined to be not being executed by the second device (41).

6. A transmission program executed by a transmission device (30), the program comprising:
analyzing a request received from a first device (40) to determine whether the request is a request that requires order controlled execution;
specifying an address range of a memory including a memory address storing data to be subjected to the requested processing, the address range being segmented into a size which is the unit of process execution,by analyzing the request received from the first device (40);
storing the received request in an order controlled memory unit (32) when the received request is a request that requires order controlled execution and storing the received request in a non-order controlled memory unit corresponding to the specified address ranges when the received request is a request that does not require order controlled execution;
determining for each of the non-order controlled memory unit whether the request stored therein is being executed by a second device (41) ; and
transmitting a request which is stored in the non-order controlled memory unit to the second device when the stored request is determined to be not being executed by the second device (41).
